# EUROPEAN PATENT SPECIFICATION

(11) **EP 3 689 197 B1**
(45) Date of publication and mention of the grant of the patent: **03.11.2021**
(21) Application number: 20154996.1
(22) Date of filing: 31.01.2020
(51) Int. Cl.: A47J 27/14

(54) **A SYSTEM FOR THE QUICK COOKING OF A NON-PRECOOKED DRY PASTA AND RELATED COOKING METHOD**
SYSTEM ZUM SCHNELLEN KOCHEN VON NICHT VORGEKOCHTEN TROCKENEN TEIGWAREN UND ZUGEHÖRIGES KOCHVERFAHREN
SYSTÈME POUR LA CUISSON RAPIDE D'UNE PÂTE SÈCHE NON PRÉ-CUISINÉE ET PROCÉDÉ DE CUISSON ASSOCIÉ

(30) Priority: 31.01.2019 IT 201900001407
(43) Date of publication of application: 05.08.2020
(73) Proprietor: Pastificio Andalini S.p.A., 44042 Cento (FE) (IT)
(72) Inventor: CAMPANA, Matteo, 47121 FORLÌ (FC) (IT); CASADEI, Lorenzo, 47522 CESENA (FC) (IT); ERBACCI, Stefano, 48022 SAN POTITO (RA) (IT); FALASCHETTI, Maria Pia, 47122 FORLÌ (FC) (IT); GOLFARELLI, Alessandro, 47034 FORLIMPOPOLI (FC) (IT); TORELLI, Stefano, 47121 FORLÌ (FC) (IT); VENTURI, Stefano, 44042 CENTO (FE) (IT)
(74) Representative: Musconi, Roberta

(56) References cited:
- EP-A2- 1 401 310
- US-A- 4 741 261
- US-A1- 2003 051 606

## Description

### CROSS-REFERENCE TO RELATED APPLICATIONS

This application claims priority from Italian Patent Application No. 102019000001407 filed on January 31, 2019.

### TECHNICAL FIELD

This invention relates to a system for the quick cooking of non-precooked dry pasta and a related cooking method.

This invention finds advantageous application as a professional tool for quick catering (commonly called "fast") conducted by an operator who supervises and operates the system, to which the following description will make explicit reference without any loss of generality thereby.

### PRIOR ART

There are several pasta-cooking systems on the market that are dedicated to the professional sector and can be divided into: industrial pasta cookers with long cooking times and quick pasta cookers that require pre-cooked dry pasta.

Known quick pasta-cooking systems normally have one or two cooking chambers. The systems with two cooking chambers are more complex, expensive, and require long cooking times, even if they make it possible to cook the dry pasta more gently and, therefore, to obtain a higher quality pasta.

In contrast, single chamber systems, as described for example in US2003051606, are constructively simpler, they make it possible to reduce the cooking time of the pasta (typically the cooking time in this type of system is around 150-180s), but due to the less gentle cooking, the final quality of the cooked pasta is compromised. Moreover, the latter systems do not guarantee good cooking repeatability (i.e. it is not possible to obtain the same cooking quality of the dry pasta on each cooking cycle, regardless of external conditions) and good cooking uniformity (i.e. it is not possible to obtain the same cooking quality within a single cooking cycle).

### DESCRIPTION OF THE INVENTION

The purpose of this invention is, therefore, to provide a system for the quick cooking of non-precooked dry pasta and a related cooking method that are free of the drawbacks of the prior art, and that are easy and economical to produce.

According to this invention, a system is provided for the quick cooking of non-precooked dry pasta and a related cooking method as claimed in the attached claims.

### BRIEF DESCRIPTION OF THE DRAWINGS

For a better understanding of the invention, several embodiments are described merely by way of example where:
- Figure 1 is a plan of the system in accordance with this invention; and
- Figure 2 is a block diagram of the operation of the system in Figure 1.

### PREFERRED EMBODIMENTS OF THE INVENTION

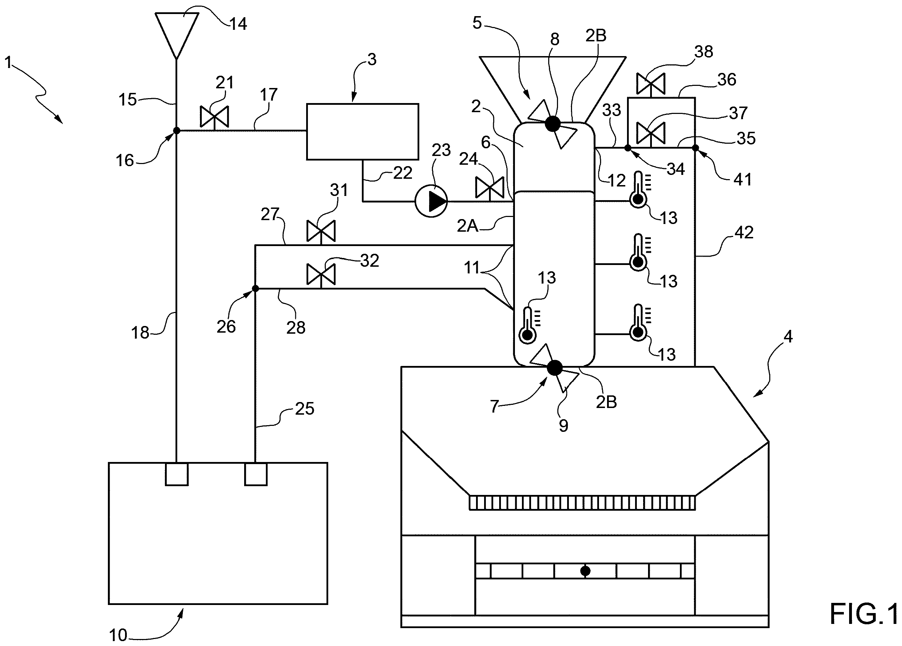

In Figure 1, the reference number 1 generally indicates a system for the quick cooking of non-precooked dry pasta as a whole. The system 1 is a professional tool for quick catering (commonly called "fast") conducted by an operator who supervises and operates the system 1 and then picks up the cooked pasta to separately add the seasoning. The system 1 does not produce the seasoning; this is done separately through the use of external equipment (such as a flame or induction hob). The dry pasta cooked with the system 1 has preferably a thin folder (i.e. thickness).

The system 1 comprises a single cooking chamber 2 inside of which the cooking water is supplied.

The cooking chamber 2 is delimited by a side wall 2A and/or two end walls 2B. The cooking chamber 2 is, therefore, basically a tank into which the pre-heated cooking water is supplied. The system 1 involves just one cooking step for the dry pasta.

The system 1 for the quick cooking of dry pasta comprises a cooking water heating device 3 and a draining unit 4 arranged downstream of the cooking chamber 2. The draining unit 4 is configured to collect the cooking water and the cooked pasta at the end of the cooking cycle.

Each cooking cycle preferably uses fresh pre-heated cooking water and does not reuse the cooking water from the previous cycle.

At the start of the new cooking cycle, the dry pasta is inserted directly into the pre-heated cooking water at the inlet temperature Ti, which is already present in the cooking chamber 2, and which is then heated to a higher operating temperature To than the inlet temperature Ti. At any time before the start of the cooking cycle, therefore, the walls 2A and 2B of the cooking chamber 2 are at least at the same temperature as the inlet temperature Ti.

The inlet temperature Ti ranges between 80 and 100°C, preferably the inlet temperature Ti is approximately 90°C. The operating temperature To is higher than the inlet temperature Ti. In particular, the operating temperature To is usually higher than 120°C, in particular it is about 140°.

The cooking chamber 2 is configured to collect the pasta in the pre-heated cooking water at the inlet temperature Ti that is then further heated to the operating temperature To to cook the pasta. The cooking chamber 2 is provided with a supply opening 5 for the dry pasta, a supply opening 6 for the pre-heated cooking water from the heating device 3, and a discharge opening 7 for the cooking water and the cooked pasta at the end of the cooking cycle.

A valve 8 is advantageously arranged in correspondence of the supply opening 5 for the dry pasta, which enables or prevents the dry pasta from being supplied to the cooking chamber 2. Analogously, in correspondence of the discharge opening 7 for the cooking water and the cooked pasta, there is a valve 9 that enables or prevents the cooking water and the cooked pasta from being supplied to the draining unit 4 below.

According to a possible embodiment, the valves 8 and 9 occupy the whole surface of the end walls 2B. In other words, the valves 8 and 9 themselves define the corresponding end walls 2B.

According to a possible embodiment, in correspondence of the supply opening 5 for the dry pasta, the system 1 comprises, for example, a hopper for supplying the dry pasta to the cooking chamber 2.

The draining unit 4 is arranged downstream of the cooking chamber 2 and is configured to collect the cooking water and the cooked pasta supplied through the discharge opening 7 at the end of the cooking cycle.

According to a possible embodiment, the system 1 comprises opening and closing elements, such as doors, in correspondence of the supply opening 5 for the dry pasta and of the draining unit 4 in order to access the compartment where the pasta is stored (in the case of the supply opening 5) or picked up (in the case of the draining unit 4).

The draining unit 4 advantageously comprises a draining element (not illustrated), such as a strainer. The strainer is made in such a way as to preserve part of the cooking water that is then used to amalgamate the pasta with the seasoning, using the starch contained in the cooking water.

According to one possible embodiment, the draining element is a container comprising a side wall and a bottom wall. The side wall basically has a lower portion and an upper portion. The upper portion is higher (i.e. has a greater longitudinal extension) than the lower portion. The upper portion comprises a plurality of holes through which the cooking water flows out to drain the pasta. The lower portion and the bottom wall are without holes. The cooking water collected in correspondence of the lower portion is, therefore, collected and then used to amalgamate the pasta with the seasoning using the starch contained in the cooking water.

As illustrated in Figure 1, the system 1 also comprises a vapour generation device 10 that supplies water vapour through at least two water vapour supply openings 11 made in the cooking chamber 2 to introduce it into the cooking water. By introducing water vapour, the cooking water is further heated, a forced circulation of the cooking water is established in the cooking chamber 2, and the pasta is stirred in the cooking chamber 2.

The water vapour is preferably supplied to the cooking chamber 2 under pressure.

At the end of each cooking cycle, the water vapour is removed through a water vapour discharge opening 12, depressurising the cooking chamber 2 at the same time. In fact, considering that the cooking chamber 2 is a closed tank, as the temperature inside the cooking chamber 2 increases, the pressure inside it also increases.

The system 1 comprises two or more water vapour supply openings 11 to further increase the forced circulation of the cooking water in the cooking chamber 2 and, thus, to stir the pasta more during cooking. In other words, by introducing water vapour from two or more water vapour supply openings 11, the turbulence in the cooking water is increased.

In correspondence of each water vapour supply opening 11 there is, advantageously, a nozzle (not illustrated) that introduces the vapour into the cooking chamber 2.

The water vapour supply openings 11 preferably have an orientation i.e. a relative inclination in relation to the cooking chamber 2 that is different to each other. In other words, the water vapour supply openings 11 are inclined at a different angle to each other in relation to the side wall 2A and/or to the end walls 2B.

Alternatively, at least two water vapour supply openings 11 have an orientation i.e. a relative inclination in relation to the cooking chamber 2 that is basically the same as each other. In other words, at least two water vapour supply openings 11 are inclined with basically the same inclination angle in relation to the side wall 2A and/or to the end walls 2B.

In addition, the water vapour supply openings 11 can be actuated independently of each other. The supply openings 11 can, therefore, be operated simultaneously or alternately to generate the forced circulation of the cooking water, and, thus, of the pasta, inside the cooking chamber 2.

In particular, if there are nozzles in correspondence of the supply openings 11, the nozzles have an orientation in relation to the side wall 2A and/or the end walls 2B of the cooking chamber 2 that is different from each other. For example, one of the nozzles introduces water vapour along a direction that is basically perpendicular to the side wall 2A of the cooking chamber 2. While the other nozzle introduces water vapour along the direction basically transverse (e.g. along a tangential direction) to the side wall 2A of the cooking chamber 2. The nozzles can be actuated independently of each other. The nozzles can, therefore, be operated simultaneously or alternately to generate the forced circulation of the cooking water, and, thus, of the pasta, inside the cooking chamber 2.

In the preferred embodiment, illustrated in Figure 1, the supply opening 5 for the dry pasta is arranged in correspondence of the upper end wall 2B; while the discharge opening 7 for the cooking water and the cooked pasta is arranged in correspondence of the lower end wall 2B. On the other hand, the cooking water supply opening 6, the vapour supply opening 11, and the water vapour discharge opening 12 are arranged in correspondence of the side wall 2A. In particular, the cooking water supply openings 6, the water vapour supply opening 11, and the water vapour discharge opening 12 are arranged at different levels (i.e. heights). The term height defines the dimension measured parallel to the side wall 2A.

In particular, as illustrated in Figure 1, the openings 6, 11, and 12 are preferably arranged in the following sequence along the dimension measured parallel to the side wall 2A: the water vapour discharge opening 12 is arranged high up (basically near the upper end surface 2B); the cooking water supply opening 6 is arranged at a lower level; and then the water vapour supply opening 11 is arranged below that. Since the water vapour supply opening 11 is lower than the pre-heated cooking water supply opening 6, the water vapour is directly introduced into the cooking water, which is then heated. The water vapour is, therefore, not introduced directly onto the pasta, but rather into the cooking water, in order to avoid direct contact between the pasta being cooked and the water vapour introduced. This creates a combined cooking involving cooking water and water vapour, which is gentler.

The system 1 comprises a plurality of temperature sensors 13. The temperature sensors 13 are arranged both outside the cooking chamber 2 and inside the cooking chamber 2. The temperature sensor 13 arranged outside the cooking chamber 2 detects the outside temperature of the room surrounding the cooking chamber 2.

The temperature sensors 13 arranged in the cooking chamber 2, on the other hand, detect the temperature of the cooking water at different levels (i.e. heights) in the cooking chamber 2 to ensure that the actual inlet temperature Ti corresponds to a set reference inlet temperature Tir and/or that the actual operating temperature To corresponds to a set reference operating temperature Tor. The temperature sensors 13 constantly monitor the outside temperature, the inlet temperature Ti, and the operating temperature To, and in the cooking chamber 2, and send the signal to an electronic control unit ECU that processes the signal and adjusts, particularly with a feedback control, the inlet temperature Ti of the cooking water in the cooking chamber 2 and/or the operating temperature To of the cooking water in the cooking chamber 2. The adjustment of the inlet temperature Ti and the operating temperature To can be made independently of each other.

If the electronic control unit ECU detects that the actual inlet temperature Ti is lower than the reference inlet temperature value Tir and/or if the actual operating temperature To is lower than the reference operating temperature value Tor, then it commands the introduction of water vapour into the cooking chamber 2.

In addition, the electronic control unit ECU determines a compensation value ΔT depending on the external temperature, the inlet temperature Ti, and/or the operating temperature To to be added to or subtracted from the theoretical cooking time T. The theoretical cooking time T is usually set by the control unit ECU depending on the type of pasta selected. The theoretical cooking time T usually ranges between 40s and 70s. Through this compensation it is possible to optimise the cooking cycles in relation to the different types of pasta, environmental conditions, and/or the system 1 states.

As illustrated in Figure 1, the system 1 comprises a plurality of pipes for supplying or discharging cooking water or vapour. In particular, the cooking water is drawn from a water source 14 (e.g. the water mains) via a pipe 15. A node 16 is arranged along the pipe 15, wherein the pipe 15 branches off into a pipe 17 that supplies water to the heating device 3 and into a pipe 18 that supplies water to the vapour generation device 10. A shut-off valve 21 is arranged along the pipe 17, which enables or prevents the cooking water to pass to the heating device 3. A pipe 22 starts from the heating device 3 that supplies the pre-heated cooking water to the cooking chamber 2. A pump 23 and a shut-off valve 24 are arranged along the pipe 22. Depending on how the valve 24 is controlled, the cooking water's passage to the cooking chamber 2 is either enabled or prevented. When supplying pre-heated cooking water to the cooking chamber 2, the cooking chamber 2 valves 7 and 8 are closed. In particular, the water is kept in the cooking chamber 2 at the inlet temperature Ti until the operator starts the cooking cycle. In other words, only after the pasta has been introduced into the cooking chamber 2 is the cooking water heated to the operating temperature To for cooking the pasta.

The cooking water is supplied via the pipe 18 to the vapour generation device 10, in which the cooking water is heated so that it evaporates and generates water vapour. The water vapour is supplied to the cooking chamber 2 via the pipe 25. Along the pipe 25 there is a node 26, wherein the pipe 25 branches off into two pipes 27 and 28. The pipes 27 and 28 supply the water vapour to the cooking chamber 2 at different levels. Along the pipe 27, there is a shut-off valve 31, which enables or prevents the water vapour's passage.

Similarly, a shut-off valve 32 is arranged along the pipe 27 that enables or prevents the water vapour's passage. The shut-off valves 31 and 32 can be actuated independently of each other. The shut-off valves 31 and 32 are preferably operated in a pulse mode (i.e. opened quickly for a few seconds), to encourage the forced circulation of the cooking water and to stir the pasta, thus ensuring uniform cooking.

As illustrated in Figure 1, a discharge pipe 33 starts from the water vapour discharge opening 12. A node 34 is arranged along the discharge pipe 33, wherein the pipe 35 branches off into a pipe 35 that supplies the water vapour to be disposed. A pipe 36 branches off from the node 34 parallel to the pipe 35. Two shut-off valves 37 and 38 are arranged along the pipes 34 and 35, respectively, that enable or prevent the water vapour's passage along the corresponding pipe 35 or 36. At the end or shortly before the end of the cooking, the water vapour supply to the cooking chamber 2 is stopped and then the shut-off valve 37 and/or 38 is opened (e.g. for just a few seconds) to discharge the water vapour and, thus, to depressurise the cooking chamber 2. Downstream of the shut-off valves 37 and 38, the two pipes 35 and 36 join at the node 41. From the node 41, a pipe 42 branches off and supplies the water vapour to the discharge unit 4.

The shut-off valves 21, 24, 31, 32, 37, and 38 are preferably solenoid valves.

In the preferred embodiment, the system 1 also comprises a data entering and displaying interface (not illustrated). The data entering and displaying interface is for example a touch screen with which the operator can select, for example, the system 1 mode (i.e. pre-heating, cooking cycle, descaling cycle, or cleaning cycle that will be described in detail below), the type of pasta chosen, the theoretical cooking time T, the inlet temperature Ti (if different from the pre-set one), etc. It can also display the output information of the system 1, such as the operating temperature To, the actual cooking time T, the cooking step, the type of cycle currently being performed by the system 1, etc.

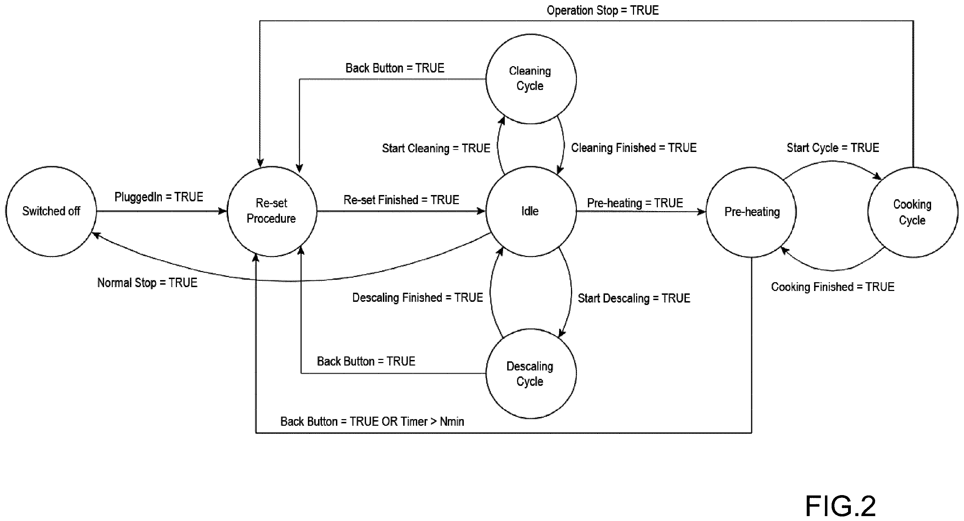

Figure 2 illustrates a plan of the operation of the system 1, by way of example. The system 1 is initially switched off and, thus, none of the elements (e.g. the heating device 3, the water vapour generation device 10, etc.) of the system 1 are supplied with electricity. When the power is switched on, the control unit ECU checks if the plug is plugged in. If this condition is fulfilled (i.e. "True") the re-set procedure is started. During the re-set procedure, the cooking chamber 2 is depressurised and the valve 9, through which any water in the system 1 is drained, is opened. If the re-set procedure is completed, the system 1 is in standby mode (indicated as "idle"), wherein the water vapour generation device 10 and the cooking water heating device 3 are not active. The system 1 waits for the input of the operator who, by pressing one of the buttons on the interface, can switch the system 1 to one of the following modes: pre-heating, cooking cycle, descaling cycle, and cleaning cycle.

In the pre-heating mode, the water vapour generation device 10 and the cooking water heating device 3 are activated.

The pre-heated cooking water is supplied to the cooking chamber 2 through the pipe 22, while the valves 8 and 9 are closed. While waiting for the operator to start cooking the dry pasta, the inlet temperature Ti of the cooking chamber 2 and the temperature outside the cooking chamber 2 are constantly monitored. When a drop in the inlet temperature Ti is recorded, water vapour is introduced to bring the water back to the set reference inlet temperature Ti. When the operator selects the start of the cooking cycle, the pasta is introduced into the cooking chamber 2 and the water vapour is introduced to further heat the cooking water inside the cooking chamber 2 up to the operating temperature To.

If the system 1 continues in the pre-heating mode for longer than a threshold value that can be pre-set, the system 1 automatically switches to the re-set procedure mode, after having drained the cooking chamber 2 through the re-set procedure.

In standby mode, the system 1 automatically checked whether a cleaning cycle needs to be started.

The cleaning cycle can also be manually set.

If the result of the check is affirmative (i.e. True), the cleaning cycle is started. At the end of the cleaning cycle, the system 1 returns to standby mode. Alternatively, by pressing the "back" button, for example, the operator can choose to return the system 1 to the re-set procedure. In standby mode, the system automatically checks whether a descaling cycle needs to be started. The descaling cycle can also be manually set. If the result of the check is affirmative (i.e. True), the descaling cycle is started. At the end of the descaling cycle, the system 1 returns to standby mode. Alternatively, by pressing the "back" button, for example, the operator can choose to return the system 1 to the re-set procedure.

The cooking cycle mode is the operating mode of the system 1 after start-up. The start-up can be controlled via buttons on the interface. The dry pasta is then introduced through the opening of the valve 8, which is then closed again. The water vapour generated by the water vapour generation device 10 is then introduced into the cooking chamber 2, preferably in a pulse mode, to bring the cooking water to the operating temperature To. At the end, or shortly before the end, of the cooking step (usually after almost a minute of cooking) the flow of water vapour is stopped, after which the shut-off valve 37 or 38 is opened to depressurise the cooking chamber 2. Then the valve 9 is opened to make the pasta slide into the strainer of the draining unit 4. The system 1 warns the operator of the draining via a visual signal on the interface or using an acoustic signal.

For example, the operator opens the special door (if present) of the draining unit 4 and takes out the draining element containing the cooked pasta and part of the cooking water. After this, the system 1 automatically returns to the re-set procedure.

The system 1 described above has multiple advantages. First of all, the system 1 makes it possible to cook the dry pasta (for example Andalini pasta that cooks in four minutes - A4m) in 60 seconds, without needing to pre-cook it, thus achieving a significant reduction in the cooking time, which can be as much as 75%, thus meeting the needs of professional use for fast food catering. The cooking time is also reduced by keeping the cooking water and the cooking chamber 2 itself at the inlet temperature Ti, so that the system 1 is ready to use at any time.

The combined use of pre-heated cooking water and water vapour makes it possible to cook the pasta using a single cooking step, i.e. without pre-cooking the dry pasta and makes cooking gentler, because the vapour is not in direct contact with the pasta.

By introducing water vapour through two different supply openings 11, which are preferably also directed differently from each other, the cooking water is forced to circulate in the cooking chamber 2, so that the cooking water is heated evenly and the pasta is stirred.

The control unit ECU continuously monitors the inlet temperature Ti, the operating temperature To, and the temperature outside the cooking chamber 2 and, if necessary, intervenes to increase or decrease the inlet temperature Ti and/or the operating temperature To. In addition, the unit ECU increases or reduces the cooking time of the pasta depending on the inlet temperature Ti, the operating temperature To, and the external temperature detected.

The system 1 also makes it possible to maintain the inlet temperature Ti in the cooking chamber 2 between the introduction of the water and the actual start of the cooking cycle, without the aid of external elements, for example by making a interspace filled with a thermovector fluid in correspondence of the side wall 2A and/or the end walls 2B of the cooking chamber 2. In the system 1, the temperature in the cooking chamber 2 is maintained (especially at the inlet temperature Ti) since the pre-heated cooking water remains at the inlet temperature Ti in the cooking chamber 2 between the introduction of the cooking water and the actual start of the cooking cycle. In addition, the cooking water inlet temperature Ti is continuously monitored and, through the periodic supply of water vapour, the cooking water is always kept at the inlet temperature Ti. The pre-heated cooking water will then be used as cooking water when the operator requests a new cooking cycle. In this case, the cooking water is brought to the operating temperature To by the introduction of additional water vapour.

The draining element of the draining unit 4 allows the operator to easily pick up the cooked pasta by preserving part of the cooking water that is used to mix it with the seasoning.

Moreover, as the pasta is supplied to the cooking chamber 2 dry and not pre-cooked, the cooked pasta obtained is of a higher quality.

Therefore, the system 1 makes a quality pasta using gentle cooking (e.g. without direct steam), so that the cooking water can penetrate the dry pasta and an easily digestible pasta is obtained.

The system 1 guarantees repeatability, i.e. same quality of pasta cooking is attained across different cooking cycles, regardless of the external conditions (external and inlet pasta temperature) and the use/status of the system 1 (i.e. regardless of whether there are sporadic or close cooking cycles).

Moreover, the system 1 guarantees uniformity, i.e. the same quality of cooking is attained within a single portion of cooked pasta.

## Claims

1. A system (1) for quick cooking of non-precooked dry pasta comprising:
a heating device (3) to pre-heat the pasta cooking water;
a cooking chamber (2), which is configured to cook the pasta in the cooking water; the cooking chamber (2) is provided with a supply opening (5) to supply the non-precooked dry pasta, a supply opening (6) to supply the pre-heated cooking water from the heating device (3) and a discharge opening (7) to discharge the cooking water and the cooked pasta at the end of each cooking cycle;
a draining unit (4), which is arranged downstream of the cooking chamber (2) and is configured to receive the cooking water and the cooked pasta supplied through the discharge opening (7) at the end of the cooking cycle; and
a water vapour generating device (10);
the system (1) is **characterised in that** the water vapour generating device (10) comprises two or more water vapour supply openings (11) made in the cooking chamber (2), so as to heat the cooking water, establish a forced circulation of the cooking water in the cooking chamber (2) and stir the pasta.

2. The system (1) according to claim 1, wherein at least two water vapour supply openings (11) are oriented, in relation to the cooking chamber (2), which is equal to one another.

3. The system (1) according to claim 1, wherein the water vapour supply openings (11) are oriented, in relation to the cooking chamber (2), which is different to one another.

4. The system (1) according to any of the claims from 1 to 3, wherein the water vapour supply openings (11) are actuated independently from one another.

5. The system (1) according to one of the claims from 1 to 4, wherein the water vapour supply opening (11) is arranged at a lower level than the pre-heated cooking water supply opening (6), so as to directly introduce the water vapour into the cooking water.

6. The system (1) according to one of the claims from 1 to 5, wherein the water vapour is supplied under pressure to the cooking chamber (2).

7. The system (1) according to one of the claims from 1 to 6, wherein the cooking chamber (2) comprises a water vapour discharge opening (12) to remove the water vapour and to depressurize the cooking chamber (2) at the end of the cooking cycle.

8. The system (1) according to one of the claims from 1 to 7 and comprising a hopper to supply the dry pasta to the cooking chamber (2).

9. The system (1) according to one of the claims from 1 to 8 and comprising a data entering and displaying interface.

10. The system (1) according to one of the claims from 1 to 9 and comprising a plurality of temperature sensors designed to detect an external temperature, a cooking water inlet temperature (Ti) and a cooking water operating temperature (To) so as to adjust, preferably with a feedback control, the cooking water inlet temperature (Ti) in the cooking chamber (2) and/or the cooking water operating temperature (To) in the cooking chamber (2).

11. The system (1) according to one of the claims from 1 to 10, wherein the draining unit (4) comprises a draining element provided with a side wall and a bottom wall; ad wherein the side wall has an upper portion comprising a plurality of holes, through which the cooking water flows out, and a lower portion without holes in order to collect part of the cooking water.

12. A method for quick cooking of non-precooked dry pasta with a cooking system (1) provided with a cooking chamber (2); the method comprising the steps of:
supplying the pre-heated cooking water to the cooking chamber (2) at an inlet temperature (Ti);
starting the cooking cycle and heating the cooking water collected in the cooking chamber (2) at an operating temperature (To), after having introduced the pasta into the cooking chamber (2), through the introduction of water vapour;
measuring an external temperature, the inlet temperature (Ti) and the operating temperature (To) of the cooking water collected in the cooking chamber (2) by means of temperature sensors (13);
comparing the measured inlet temperature (Ti) with a reference inlet temperature value (Tir) and/or the measured operating temperature (To) with a reference operating temperature value (Tor);
introducing water vapour into the cooking chamber (2), if the actual inlet temperature (Ti) is lower than the reference inlet temperature value (Tir) and/or if the actual operating temperature (To) is lower than the reference operating temperature value (Tor);
determining a compensation value (ΔT) as a function of the external temperature, of the inlet temperature (Ti) and/or of the operating temperature (To) to be added to or subtracted from the theoretical cooking time (T);
removing the water vapour and depressurizing the cooking chamber (2) at the end of the cooking cycle; and
picking up the cooked pasta from a draining unit (4).

13. The method according to claim 12, wherein the cooking water supplied to the cooking chamber (2) has the inlet temperature (Ti) ranging from 80 to 100°C, preferably equal to 90°C.

14. The method according to claim 12 or 13, wherein the operating temperature (To) is greater than 120°C, in particular substantially equal to approximately 140°.

15. The method according to one of the claims from 12 to 14 and comprising the further step of keeping the cooking water in the cooking chamber (2) at the inlet temperature (Ti) until the introduction of the pasta into the cooking chamber (2).

## Patentansprüche

1. System (1) zum schnellen Kochen von nicht vorgekochter trockener Pasta, umfassend:
eine Heizvorrichtung (3), um das Pasta-Kochwasser vorzuheizen;
eine Kochkammer (2), die konfiguriert ist, die Pasta in dem Kochwasser zu kochen; wobei die Kochkammer (2) mit einer Zufuhröffnung (5), um die nicht vorgekochte trockene Pasta zuzuführen, einer Zufuhröffnung (6) zum Zuführen des vorgeheizten Kochwassers von der Heizvorrichtung (3) und einer Austrittsöffnung (7) zum Abführen des Kochwassers und der gekochten Pasta am Ende des jeweiligen Kochzyklus versehen ist;
eine Ablaufeinheit (4), die stromabwärts von der Kochkammer (2) vorgesehen ist und konfiguriert ist, das Kochwasser und die gekochte Pasta, die durch die Austrittsöffnung (7) zugeführt werden, am Ende des Kochzyklus aufzunehmen; und
eine Wasserdampf-Erzeugungsvorrichtung (10);
wobei das System (1) **dadurch gekennzeichnet ist, dass** die Wasserdampf-Erzeugungsvorrichtung (10) zwei oder mehr Wasserdampf-Zufuhröffnungen (11), die in der Kochkammer (2) ausgebildet sind, umfasst, um das Kochwasser zu erhitzen, eine Zwangszirkulation des Kochwassers in der Kochkammer (2) auszubilden und die Pasta umzurühren.

2. System (1) nach Anspruch 1, wobei wenigstens zwei Wasserdampf-Zufuhröffnungen (11), bezogen auf die Kochkammer (2), jeweils gleich orientiert sind.

3. System (1) nach Anspruch 1, wobei die Wasserdampf-Zufuhröffnungen (11), bezogen auf die Kochkammer (2), jeweils unterschiedlich orientiert sind.

4. System (1) nach einem der Ansprüche 1 bis 3, wobei die Wasserdampf-Zufuhröffnungen (11) unabhängig voneinander betätigt werden.

5. System (1) nach einem der Ansprüche 1 bis 4, wobei die Wasserdampf-Zufuhröffnung (11) auf einer niedrigeren Höhe als die Zufuhröffnung (6) für das vorgeheizte Kochwasser angeordnet ist, um den Wasserdampf direkt in das Kochwasser einzuleiten.

6. System (1) nach einem der Ansprüche 1 bis 5, wobei der Wasserdampf der Kochkammer (2) unter Druck zugeführt wird.

7. System (1) nach einem der Ansprüche 1 bis 6, wobei die Kochkammer (2) eine Wasserdampf-Abführöffnung (12) umfasst, um am Ende des Kochzyklus den Wasserdampf zu entfernen und den Druck in der Kochkammer (2) abzubauen.

8. System (1) nach einem der Ansprüche 1 bis 7 und umfassend einen Trichter, um die trockene Pasta der Kochkammer (2) zuzuführen.

9. System (1) nach einem der Ansprüche 1 bis 8 und umfassend eine Schnittstelle zum Eingeben und Anzeigen von Daten.

10. System (1) nach einem der Ansprüche 1 bis 9 und umfassend mehrere Temperatursensoren, die ausgelegt sind, eine Außentemperatur, eine Kochwasser-Eintrittstemperatur (Ti) und eine Kochwasser-Betriebstemperatur (To) zu detektieren, um, vorzugsweise mittels einer Rückkopplungsregelung, die Kochwasser-Eintrittstemperatur (Ti) in die Kochkammer (2) und/oder die Kochwasser-Betriebstemperatur (To) in der Kochkammer (2) einzustellen.

11. System (1) nach einem der Ansprüche 1 bis 10, wobei die Ablaufeinheit (4) ein Ablaufelement umfasst, das mit einer Seitenwand und einer Bodenwand versehen ist; und wobei die Seitenwand einen oberen Abschnitt, der mehrere Löcher aufweist, durch die das Kochwasser herausströmt, und einen unteren Abschnitt ohne Löcher, um einen Teil des Kochwassers zu sammeln, aufweist.

12. Verfahren zum schnellen Kochen von nicht vorgekochter trockener Pasta mit einem Kochsystem (1), das mit einer Kochkammer (2) versehen ist; wobei das Verfahren die Schritte umfasst:
Zuführen des vorgeheizten Kochwassers zur Kochkammer (2) mit einer Eintrittstemperatur (Ti);
Starten des Kochzyklus und Erhitzen des in der Kochkammer (2) gesammelten Kochwassers auf eine Betriebstemperatur (To), nachdem die Pasta in die Kochkammer (2) eingebracht worden ist, durch das Einleiten von Wasserdampf;
Messen einer Außentemperatur, der Eintrittstemperatur (Ti) und der Betriebstemperatur (To) des in der Kochkammer (2) gesammelten Kochwassers mittels Temperatursensoren (13);
Vergleichen der gemessenen Eintrittstemperatur (Ti) mit einem Referenz-Eintrittstemperaturwert (Tir) und/oder der gemessenen Betriebstemperatur (To) mit einem Referenz-Betriebstemperaturwert (Tor);
Einleiten von Wasserdampf in die Kochkammer (2), falls die aktuelle Eintrittstemperatur (Ti) niedriger als der Referenz-Eintrittstemperaturwert (Tir) ist und/oder falls die aktuelle Betriebstemperatur (To) niedriger als der Referenz-Betriebstemperaturwert (Tor) ist;
Bestimmen eines Kompensationswerts (ΔT) in Abhängigkeit von der Außentemperatur, der Eintrittstemperatur (Ti) und/oder der Betriebstemperatur (To), der zur theoretischen Kochzeit (T) addiert oder von dieser subtrahiert werden muss;
Entfernen des Wasserdampfs und Abbauen des Drucks in der Kochkammer (2) am Ende des Kochzyklus; und
Entnehmen der gekochten Pasta aus einer Ablaufeinheit (4).

13. Verfahren nach Anspruch 12, wobei das der Kochkammer (2) zugeführte Kochwasser die Eintrittstemperatur (Ti) besitzt, die in einem Bereich von 80 bis 100 °C liegt und vorzugsweise gleich 90 °C beträgt.

14. Verfahren nach Anspruch 12 oder 13, wobei die Betriebstemperatur (To) höher als 120 °C ist, insbesondere im Wesentlichen gleich ungefähr 140 °C beträgt.

15. Verfahren nach einem der Ansprüche 12 bis 14 und umfassend den weiteren Schritt des Haltens des Kochwassers in der Kochkammer (2) auf der Eintrittstemperatur (Ti) bis zum Einbringen der Pasta in die Kochkammer (2).

## Revendications

1. Système (1) de cuisson rapide de pâtes sèches non précuites comprenant :
un dispositif de chauffage (3) pour préchauffer l'eau de cuisson des pâtes ;
une chambre de cuisson (2), qui est configurée pour cuire les pâtes dans l'eau de cuisson ; la chambre de cuisson (2) est munie d'une ouverture d'alimentation (5) pour l'alimentation en pâtes sèches non précuites, d'une ouverture d'alimentation (6) pour l'alimentation en eau de cuisson préchauffée du dispositif de chauffage (3) et d'une ouverture d'évacuation (7) évacuer l'eau de cuisson et les pâtes cuites à la fin de chaque cycle de cuisson ;
une unité d'égouttage (4), qui est disposée en aval de la chambre de cuisson (2) et est configurée pour recevoir l'eau de cuisson et les pâtes cuites distribuées à travers l'ouverture d'évacuation (7) à la fin du cycle de cuisson ; et
un dispositif de génération de vapeur d'eau (10) ;
le système (1) est **caractérisé en ce que** le dispositif de génération de vapeur d'eau (10) comprend deux ou plusieurs ouvertures d'alimentation en vapeur d'eau (11) pratiquées dans la chambre de cuisson (2), de manière à chauffer l'eau de cuisson, établir une circulation forcée de l'eau de cuisson dans la chambre de cuisson (2) et remuer les pâtes.

2. Système (1) selon la revendication 1, dans lequel au moins deux ouvertures d'alimentation en vapeur d'eau (11) sont orientées, par rapport à la chambre de cuisson (2), qui sont égales l'une à l'autre.

3. Système (1) selon la revendication 1, dans lequel les ouvertures d'alimentation en vapeur d'eau (11) sont orientées, par rapport à la chambre de cuisson (2), qui sont différentes les unes des autres.

4. Système (1) selon l'une quelconque des revendications 1 à 3, dans lequel les ouvertures d'alimentation en vapeur d'eau (11) sont actionnées indépendamment les unes des autres.

5. Système (1) selon l'une des revendications 1 à 4, dans lequel l'ouverture d'alimentation en vapeur d'eau (11) est disposée à un niveau inférieur à l'ouverture d'alimentation en eau de cuisson préchauffée (6), de manière à introduire directement la vapeur d'eau dans l'eau de cuisson.

6. Système (1) selon l'une des revendications 1 à 5, dans lequel la vapeur d'eau est fournie sous pression à la chambre de cuisson (2).

7. Système (1) selon l'une des revendications 1 à 6, dans lequel la chambre de cuisson (2) comprend une ouverture d'évacuation de vapeur d'eau (12) pour éliminer la vapeur d'eau et pour dépressuriser la chambre de cuisson (2) à la fin du cycle de cuisson.

8. Système (1) selon l'une des revendications 1 à 7 et comprenant une trémie pour fournir les pâtes sèches à la chambre de cuisson (2).

9. Système (1) selon l'une des revendications 1 à 8 et comprenant une interface de saisie et d'affichage de données.

10. Système (1) selon l'une des revendications 1 à 9 et comprenant une pluralité de capteurs de température destinés à détecter une température extérieure, une température d'entrée de l'eau de cuisson (Ti) et une température de fonctionnement de l'eau de cuisson (To) de manière à régler, de préférence avec une commande rétroactive, la température d'entrée de l'eau de cuisson (Ti) dans l'enceinte de cuisson (2) et/ou la température de fonctionnement de l'eau de cuisson (To) dans l'enceinte de cuisson (2).

11. Système (1) selon l'une des revendications 1 à 10, dans lequel l'unité de drainage (4) comprend un élément de drainage pourvu d'une paroi latérale et d'une paroi de fond ; et dans lequel la paroi latérale a une partie supérieure comprenant une pluralité de trous, à travers lesquels l'eau de cuisson s'écoule, et une partie inférieure sans trous afin de collecter une partie de l'eau de cuisson.

12. Procédé de cuisson rapide de pâtes sèches non précuites avec un système de cuisson (1) pourvu d'une chambre de cuisson (2) ; le procédé comprenant les étapes consistant à :
introduire l'eau de cuisson préchauffée dans la chambre de cuisson (2) à une température d'entrée (Ti) ;
démarrer le cycle de cuisson et chauffer l'eau de cuisson recueillie dans l'enceinte de cuisson (2) à une température de fonctionnement (To), après avoir introduit les pâtes dans l'enceinte de cuisson (2), par introduction de vapeur d'eau ;
mesurer une température extérieure, la température d'entrée (Ti) et la température de fonctionnement (To) de l'eau de cuisson collectée dans l'enceinte de cuisson (2) au moyen de capteurs de température (13) ;
comparer la température d'entrée mesurée (Ti) avec une valeur de température d'entrée de référence (Tir) et/ou la température de fonctionnement mesurée (To) avec une valeur de température de fonctionnement de référence (Tor) ;
introduire de la vapeur d'eau dans l'enceinte de cuisson (2), si la température réelle d'entrée (Ti) est inférieure à la valeur de température de référence d'entrée (Tir) et/ou si la température réelle de fonctionnement (To) est inférieure à la valeur de température de référence de fonctionnement (Tor) ;
déterminer une valeur de compensation (ΔT) en fonction de la température extérieure, de la température d'entrée (Ti) et/ou de la température de fonctionnement (To) à ajouter ou à retrancher au temps de cuisson théorique (T) ;
éliminer la vapeur d'eau et dépressuriser la chambre de cuisson (2) à la fin du cycle de cuisson ; et
récupérer les pâtes cuites d'un égouttoir (4).

13. Procédé selon la revendication 12, dans lequel l'eau de cuisson introduite dans la chambre de cuisson (2) a une température d'entrée (Ti) allant de 80 à 100°C, de préférence égale à 90°C.

14. Procédé selon la revendication 12 ou 13, dans lequel la température de fonctionnement (To) est supérieure à 120°C, en particulier sensiblement égale à environ 140°.

15. Procédé selon l'une des revendications 12 à 14 et comprenant l'étape supplémentaire consistant à maintenir l'eau de cuisson dans la chambre de cuisson (2) à la température d'entrée (Ti) jusqu'à l'introduction des pâtes dans la chambre de cuisson (2).
